# EUROPÄISCHE PATENTSCHRIFT

(11) **EP 1 859 182 B1**
(45) Veröffentlichungstag und Bekanntmachung des Hinweises auf die Patenterteilung: **14.10.2009**
(21) Anmeldenummer: 06723453.4
(22) Anmeldetag: 15.03.2006
(51) Int. Cl.: F16H 61/00, F16H 57/04

(54) **ANORDNUNG DES TEMPERATURSENSORS IN EINEM AUTOMATGETRIEBE**
TEMPERATURE SENSOR ARRANGEMENT IN AN AUTOMATIC GEARBOX
DISPOSITION DU CAPTEUR DE TEMPÉRATURE DANS UNE BOÎTE DE VITESSES AUTOMATIQUE

(30) Priorität: 17.03.2005 DE 102005012257
(43) Veröffentlichungstag der Anmeldung: 28.11.2007
(73) Patentinhaber: ZF Friedrichshafen AG, 88038 Friedrichshafen (DE)
(72) Erfinder: FRITZER, Anton, 88677 Markdorf (DE); PFLEGER, Tobias, 88045 Friedrichshafen (DE); EGE, Georg, 88079 Kressbronn (DE)
(86) Internationale Anmeldenummer: PCT/EP2006/002385
(87) Internationale Veröffentlichungsnummer: WO 2006/097295

(56) Entgegenhaltungen:
- DE-A1- 10 130 833
- DE-C1- 4 334 595
- US-B1- 6 688 383

## Beschreibung

Die vorliegende Erfindung betrifft die Anordnung des Temperatursensors in einem Automatgetriebe gemäß dem Oberbegriff des Patentanspruchs 1, und wie die aus der DE 10130833 A bekannt ist.

Bei den in derartigen Getrieben eingesetzten Druckreglern tritt eine temperaturabhängige Kennlinienverschiebung auf, welche, für den Fall dass sie nicht kompensiert wird, die Gangeinlegequalität verschlechtert. Um diese Kennlinienverschiebung in der Steuerung zu kompensieren, wird nach dem Stand der Technik die Temperatur gemessen. Hierbei können die in Elektronik-Modulen des Getriebes vorhandenen Temperatursensoren verwendet werden, beispielsweise die Temperatursensoren der Drucksensoren oder der LTCC-Elemente (Low Temperature Cofired Ceramic). Die von diesen Sensoren gemessene Temperatur weist in nachteiliger Weise einen deutlichen Zeitversatz zur tatsächlichen Getriebeöltemperatur auf, so dass ein separater Temperatursensor an geeigneter Stelle erforderlich ist.

Aus diesem Grunde ist vorgeschlagen worden, Rücklauföl aus dem Getriebe in einer Wanne zu sammeln und durch eine Öffnung um einen Temperatursensor zu leiten. Diese Konstruktion weist den Nachteil auf, dass bei niedrigen Temperaturen nicht sichergestellt ist, dass sich ausreichend Öl in der Wanne sammelt.

Der vorliegenden Erfindung liegt die Aufgabe zugrunde, eine Anordnung des Temperatursensors in Automatgetrieben anzugeben, durch die ohne die Notwendigkeit des Vorsehens einer zusätzlichen Permanentleckage eine Erfassung der aktuellen Temperatur auch bei niedrigen Temperaturen ermöglicht wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Anordnung des Temperatursensors in einem Automatgetriebe vorgeschlagen, bei der der Temperatursensor derart angeordnet ist, dass er permanent vom Leckageöl der Hydraulik umströmt wird. Auf diese Weise kann die Öltemperatur unmittelbar gemessen werden.

Hierbei ist der Temperatursensor an einer Stelle angeordnet, an der das Öl noch nicht durch den Wandler geflossen ist, weil dies in einer Ölerhitzung resultieren würde. Des weiteren wird als Stelle der Anordnung des Temperatursensors eine Stelle gewählt, an der ohnehin permanent Leckageöl abfließt. Dies hat den Vorteil, dass keine zusätzliche Blende zum Erzeugen einer Permanentleckage geschaffen werden muss.

Gemäß einer ersten Ausführungsform der Erfindung wird vorgeschlagen, den Temperatursensor derart anzuordnen, dass er vom Leckageöl eines Druckreglers des Getriebes, der im für einen Kaltstart relevanten Temperaturbereich permanent im Stellbereich regelt, umströmt wird.

Das Leckageöl des Druckreglers wird im Rahmen einer bevorzugten Ausführungsform der Erfindung in einem Kanal der Hydraulik gefasst und unterhalb der Grundplatte des Elektronikmoduls geführt, wo es durch eine Bohrung austritt und durch eine Öffnung in der Grundplatte des Elektronikmoduls strömt. Gemäß der Erfindung ist der Temperatursensor in dieser Öffnung angeordnet, derart, dass er vom Leckageöl umströmt wird. Damit das Leckageöl bis zum Sensor fließt, ist vorgesehen, dass die Grundplatte des Elektronikmoduls im Bereich um den Temperatursensor Kontakt zur Hydraulik hat.

Im Rahmen einer vorteilhaften Weiterbildung ist vorgesehen, die Tankkanten mehrerer Druckregler zur Temperaturmessung zusammenzufassen, von denen immer einer im Stellbereich arbeitet. Dadurch wird eine Temperaturmessung sichergestellt, auch wenn die Closed End Funktion (CE) einen Tank völlig abschneidet oder wenn bei maximalen Druck kein Öl gegen einen Tank fließt.

Beispielsweise können bei einem Umschlingungsgetriebe die Tankkanten der Druckregler von Scheibe 1 und Scheibe 2 zusammengefasst werden.

Bei einem Automatgetriebe kann zur Temperaturmessung auch das Leckageöl des Vorbefüllventils der Schaltelemente des Getriebes genutzt werden. Der Vorbefüllkanal wird über zwei Blenden vom Reduzierdruck gedrosselt und der Vorbefülldruck wird üblicherweise über ein Plattenventil eingestellt, wobei durch den Vorbefülldruck gewährleistet wird, dass die entlüfteten Schaltelemente nicht leer laufen. Bei niedrigen Temperaturen ist die Leckage in den entlüfteten Schaltelementen gering, so dass Öl über das Vorbefüllplattenventil gegen den Tank fließt.

Die Erfindung wird im Folgenden anhand der beigefügten Figuren beispielhaft näher erläutert. Es zeigen:
- Figur 1: ein Schaltschema, welches eine mögliche Anordnung des Temperatursensors in einem stufenlosen Getriebe gemäß der Erfindung darstellt;
- Figur 2: eine schematische Schnittansicht des Elektronikmoduls und des Druckreglers eines Automatgetriebes, welche die An- ordnung des Temperatursensors veranschaulicht; und
- Figur 3: ein Schaltschema, welches eine mögliche Anordnung des Temperatursensors in einem Automatgetriebe gemäß der Er- findung darstellt.

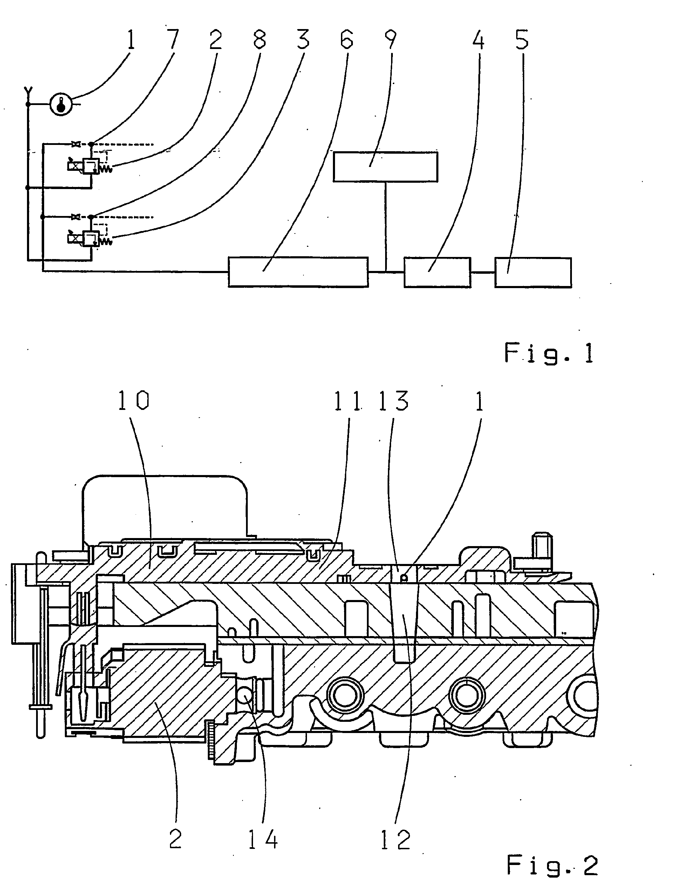

Gemäß der Erfindung und bezugnehmend auf Figur 1, welche ein beispielhaftes Schaltschema darstellt, ist vorgesehen, den Temperatursensor 1 derart anzuordnen, dass er vom Leckageöl zumindest eines Druckreglers 2, 3 des Getriebes, der im für einen Kaltstart relevanten Temperaturbereich permanent im Stellbereich regelt, umströmt wird. Beim Ausführungsbeispiel gemäß Figur 1 ist der Temperatursensor 1 derart angeordnet, dass die Tankkanten des Scheibe 1 - und des Scheibe 2 - Druckreglers 2, 3 eines Umschlingungsgetriebes zur Temperaturmessung zusammengefasst werden. Dadurch wird in vorteilhafter Weise sichergestellt, dass in jedem Betriebspunkt Öl zur Temperaturmessung zur Verfügung steht. Das Öl wird hierbei von der Pumpe 4 aus dem Ölsumpf 5 über ein Druckreduzierventil 6 über das Scheibe 1 - und das Scheibe 2 - Ventil 7, 8 den Druckreglern der Scheibe 1 bzw. der Scheibe 2 zugeführt. Mit 9 sind weitere Verbraucher, wie beispielsweise ein Wandler des Getriebes bezeichnet.

Bei der in Figur 1 dargestellten Anordnung wird gemäß Figur 2 das Leckageöl des zumindest einen Druckreglers 2 von der Tankseite 14 in einem Kanal der Hydraulik gefasst und unterhalb der Grundplatte 11 des Elektronikmoduls 10 geführt, wo es durch eine Bohrung 12 austritt und durch eine Öffnung 13 in der Grundplatte 11 des Elektronikmoduls 10 strömt. Wie aus Figur 2 ersichtlich, ist der Temperatursensor 1 derart in dieser Öffnung 13 angeordnet, dass er vom Leckageöl umströmt wird.

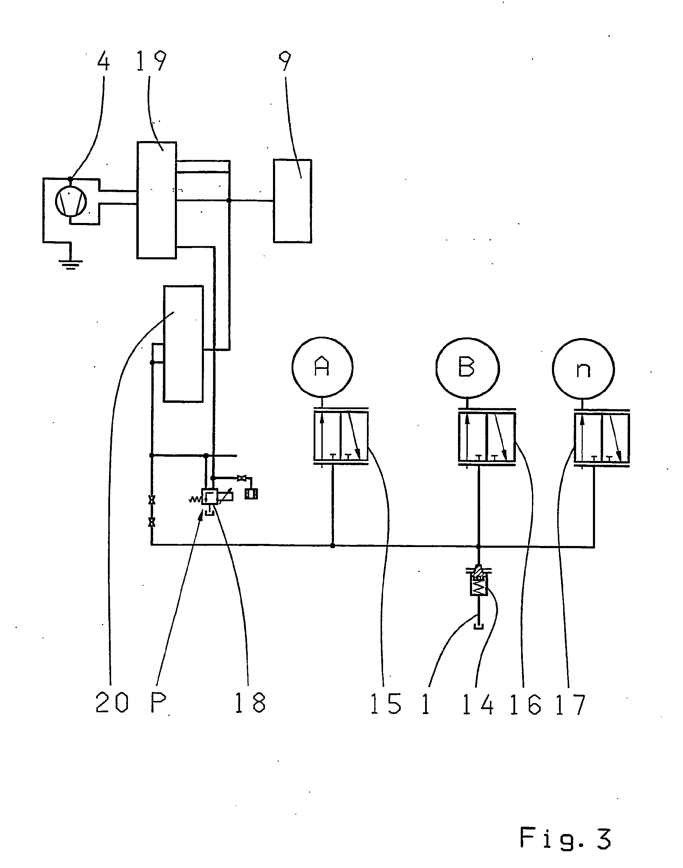

In Figur 3 ist eine mögliche erfindungsgemäße Anordnung des Temperatursensors 1 in einem Automatgetriebe anhand des gezeigten Schaltschemas dargestellt. Hierbei ist der Temperatursensor 1 am Vorbefüllventil 14 der Schaltelemente A, B, n des Getriebes angeordnet und wird vom Leckageöl des Vorbefüllventils 14 umströmt. Bei niedrigen Temperaturen ist die Leckage in den entlüfteten Schaltelementen gering, so dass Öl über das Vorbefüllventil gegen den Tank fließt und somit den Temperatursensor 1 umströmt. In der Figur 3 sind mit 15, 16 und 17 die Kupplungsventile der Schaltelemente A, B, n des Getriebes bezeichnet; das Druckreduzierventil ist mit dem Bezugszeichen 20 versehen. Ferner ist durch den Pfeil P die bereits beschriebene Alternativposition des Temperatursensors an der Tanktasche des Druckreglers 18 des Systemdruckventils 19 gezeigt.

Selbstverständlich fällt auch jede konstruktive Ausbildung, insbesondere jede räumliche Anordnung des Temperatursensors, soweit technisch sinnvoll, unter den Schutzumfang der vorliegenden Ansprüche, auch wenn diese Ausbildungen nicht explizit in der Figur oder in der Beschreibung dargestellt sind.

### Bezugszeichen

- 1: Temperatursensor
- 2: Druckregler
- 3: Druckreglers
- 4: Pumpe
- 5: Ölsumpf
- 6: Druckreduzierventil
- 7: Scheibe 1 - Ventil
- 8: Scheibe 2 - Ventil
- 9: Verbraucher
- 10: Elektronikmodul
- 11: Grundplatte des Elektronikmoduls
- 12: Bohrung
- 13: Öffnung
- 14: Vorbefüllventil
- 15: Kupplungsventil
- 16: Kupplungsventil
- 17: Kupplungsventil
- 18: Druckregler
- 19: Systemdruckventil
- 20: Druckreduzierventil

- A: Schaltelement
- B: Schaltelement
- n: Schaltelement(e)

## Patentansprüche

1. Anordnung eines Temperatursensors in einem Automatgetriebe, derart, dass der Temperatursensor (1) permanent von Leckageöl einer Hydraulik umströmt wird, **dadurch gekennzeichnet, dass** der Temperatursensor (1) an einer Stelle angeordnet ist, an der das Öl noch nicht durch einen Wandler (9) geflossen ist und an der ohnehin permanent Leckageöl abfließt.

2. Anordnung eines Temperatursensors in einem Automatgetriebe nach Anspruch 1, **dadurch gekennzeichnet, dass** der Temperatursensor (1) derart angeordnet ist, dass er vom Leckageöl zumindest eines Druckreglers (2, 3) des Getriebes, der im für einen Kaltstart relevanten Temperaturbereich permanent im Stellbereich regelt, umströmt wird.

3. Anordnung eines Temperatursensors in einem Automatgetriebe nach Anspruch 2, **dadurch gekennzeichnet, dass** zur Temperaturmessung Tankkanten mehrerer Druckregler (2, 3), von denen immer einer im Stellbereich arbeitet, zusammengefasst werden.

4. Anordnung eines Temperatursensors in einem Automatgetriebe nach Anspruch 2 oder 3, **dadurch gekennzeichnet, dass** der Temperatursensor in einer Öffnung (13) in der Grundplatte (11) des Elektronikmoduls (10) angeordnet ist, wobei das Leckageöl des Druckreglers (2) in einem Kanal der Hydraulik gefasst und unterhalb der Grundplatte (11) des Elektronikmoduls (10) geführt wird, wo es durch eine Bohrung (12) austritt und durch die Öffnung (13) strömt.

5. Anordnung eines Temperatursensors in einem Automatgetriebe nach Anspruch 1, **dadurch gekennzeichnet, dass** der Temperatursensor (1) am Vorbefüllventil (14) der Schaltelemente (A, B, n) des Getriebes angeordnet ist, derart, dass er vom Leckageöl des Vorbefüllventils (14) umströmt wird.

## Claims

1. Arrangement of a temperature sensor in an automatic transmission in such a way that leakage oil of a hydraulic system flows around the temperature sensor (1) permanently, **characterized in that** the temperature sensor (1) is arranged at a location, at which the oil has not yet flowed through a converter (9) and at which leakage oil flows away permanently in any case.

2. Arrangement of a temperature sensor in an automatic transmission according to Claim 1, **characterized in that** the temperature sensor (1) is arranged in such a way that the leakage oil of at least one pressure regulator (2, 3) of the transmission flows around it, which at least one pressure regulator (2, 3) regulates in the adjusting range permanently in the temperature range which is relevant for a cold start.

3. Arrangement of a temperature sensor in an automatic transmission according to Claim 2, **characterized in that** tank edges of a plurality of pressure regulators (2, 3), of which one always operates in the adjusting range, are combined for the temperature measurement.

4. Arrangement of a temperature sensor in an automatic transmission according to Claim 2 or 3, **characterized in that** the temperature sensor is arranged in an opening (13) in the base plate (11) of the electronic module (10), the leakage oil of the pressure regulator (2) being collected in a channel of the hydraulic system and being guided below the base plate (11) of the electronic module (10), where it exits through a bore (12) and flows through the opening (13).

5. Arrangement of a temperature sensor in an automatic transmission according to Claim 1, **characterized in that** the temperature sensor (1) is arranged on the prefilling valve (14) of the selector elements (A, B, n) of the transmission in such a way that the leakage oil of the prefilling valve (14) flows around the said temperature sensor (1).

## Revendications

1. Agencement d'un capteur de température dans une boîte de vitesses automatique, de telle sorte que le capteur de température (1) soit parcouru en permanence par de l'huile de fuite d'un système hydraulique, **caractérisé en ce que** le capteur de température (1) est disposé en un endroit où l'huile n'est pas encore passée par un convertisseur (9) et où de l'huile de fuite s'échappe de toutes façons en permanence.

2. Agencement d'un capteur de température dans une boîte de vitesses automatique selon la revendication 1, **caractérisé en ce que** le capteur de température (1) est disposé de telle sorte qu'il soit parcouru par l'huile de fuite d'au moins un régulateur de pression (2, 3) de la boîte de vitesses, qui effectue la régulation de manière permanente dans la plage de réglage dans la plage de température pertinente pour un démarrage à froid.

3. Agencement d'un capteur de température dans une boîte de vitesses automatique selon la revendication 2, **caractérisé en ce que** pour la mesure de la température, on réunit des arêtes de réservoir de plusieurs régulateurs de pression (2, 3), dont l'un fonctionne toujours dans la plage de réglage.

4. Agencement d'un capteur de température dans une boîte de vitesses automatique selon la revendication 2 ou 3, **caractérisé en ce que** le capteur de température est disposé dans une ouverture (13) dans la plaque de base (11) du module électronique (10), l'huile de fuite du régulateur de pression (2) étant contenue dans un canal du système hydraulique et étant guidée sous la plaque de base (11) du module électronique (10), où elle sort par un alésage (12) et s'écoule à travers l'ouverture (13).

5. Agencement d'un capteur de température dans une boîte de vitesses automatique selon la revendication 1, **caractérisé en ce que** le capteur de température (1) est disposé sur la soupape de préremplissage (14) des éléments de commutation (A, B, n) de la boîte de vitesses de telle sorte qu'il soit parcouru par l'huile de fuite de la soupape de préremplissage (14).
